# FASCICULE DE BREVET EUROPEEN

(11) **EP 1 226 095 B1**
(45) Date de publication et mention de la délivrance du brevet: **12.05.2004**
(21) Numéro de dépôt: 00962627.6
(22) Date de dépôt: 13.09.2000
(51) Int. Cl.: C02F 1/78, C02F 3/10, C02F 3/12

(54) **PROCEDE D'ELIMINATION DE LA MATIERE ORGANIQUE REFRACTAIRE AU TRAITEMENT BIOLOGIQUE**
VERFAHREN ZUR ENTFERNUNG VON NICHT BIOLOGISCH ABBAUBAREN STOFFEN
METHOD FOR ELIMINATING ORGANIC MATERIAL RESISTANT TO BIOLOGICAL TREATMENT

(30) Priorité: 24.09.1999 FR 9911970
(43) Date de publication de la demande: 31.07.2002
(73) Titulaire: ONDEO DEGREMONT, 92500 Rueil-Malmaison (FR)
(72) Inventeur: CORDIER, Michel, F-92000 Nanterre (FR); LE BOSSE, Xavier, F-92500 Rueil Malmaison (FR)
(74) Mandataire: Peaucelle, Chantal
(86) Numéro de dépôt international: PCT/FR2000/002530
(87) Numéro de publication internationale: WO 2001/021535

(56) Documents cités:
- EP-A- 0 881 195
- WO-A-99/41205
- PATENT ABSTRACTS OF JAPAN vol. 1998, no. 05, 30 avril 1998 (1998-04-30) & JP 10 005762 A (KAWASAKI STEEL CORP), 13 janvier 1998 (1998-01-13)

## Description

La présente invention est relative à un traitement, notamment des eaux résiduaires, visant à l'élimination de la matière organique, réfractaire à la dégradation biologique, et des sous-produits qui y en résultent.

On sait que la réduction de la matière organique dissoute réfractaire à un traitement biologique, encore appelée "DCO dure", peut être réalisée en complément d'un traitement biologique selon les procédés connus ci-après :
a) une étape finale d'oxydation mise en oeuvre en aval du traitement biologique par boues activées classiques ou par bio-réacteur à membranes.
   Cette étape d'oxydation est réalisée dans un réacteur dédié assurant le contact entre l'oxydant (ozone, peroxyde d'hydrogène ...) et l'eau qui contient la matière organique, en présence ou non d'un catalyseur. L'inconvénient de ce traitement connu est son coût puisqu'il faut fournir entre 2 et 3 kg d'ozone par kg de DCO éliminée pour transformer la matière organique en CO₂ et en H₂O.
b) une étape d'oxydation en boucle dans un réacteur de contact incorporé dans une boucle de recirculation située entre la sortie et l'entrée d'un traitement biologique.

On peut ainsi réduire la consommation d'ozone autour de 0,7 kg d'ozone par kg de DCO éliminée car il suffit de fractionner les molécules non biodégradables en molécules plus petites qui elles sont biodégradables. Cependant, ce procédé présente l'inconvénient d'être très pénalisé par le taux de recyclage vers le bassin où s'effectue le traitement biologique, qui est de 200 à 400% du débit entrant (selon les applications), ce qui, outre la consommation énergétique induite, crée une surcharge hydraulique et oblige à surdimensionner, d'un facteur de 2 à 4, le moyen de séparation du traitement biologique.

En conséquence, cette invention a pour objet un procédé d'élimination de la matière organique présente notamment dans les eaux résiduaires, réfractaire à un traitement biologique, mis en oeuvre dans un bio-réacteur à membranes de micro filtration ou d'ultrafiltration, inorganiques ou organiques, résistant à l'ozone, caractérisé en ce que l'on soumet ladite matière organique à une oxydation chimique qui est réalisée simultanément au traitement biologique membranaire, par injection d'un. gaz ozoné dans la liqueur mixte de boues activées à l'entrée du ou des modules du bio-réacteur à membranes, en utilisant, comme réacteur sous pression, là boucle de recirculation du bioréacteur, la dose d'ozone, dans ledit gaz ozoné, étant de 0,3 à 0,9 kg d'ozone par kg de DCO éliminée ladite injection du gaz ozoné étant effectuée entre le bassin biologique (2) et le bio-réacteur à membranes (6).

Enfin, il est connu, par la loi de Henry, qu'un accroissement de pression de gaz (ozone par exemple) augmente son coefficient de transfert dans la phase liquide accroissant ainsi le rendement de la réaction d'oxydation. Toutefois, la compression d'un gaz ozoné implique la mise en oeuvre de matériaux susceptibles de résister à la corrosion par l'ozone, elle entraîne une forte consommation d'énergie et elle s'avère donc très onéreuse.

La présente invention s'est ainsi fixée pour objectif d'apporter un procédé permettant de réduire la matière organique dissoute, présente notamment dans les eaux résiduaires, réfractaire à un traitement biologique, qui ne présente pas les inconvénients, précisés ci-dessus, de la technique antérieure.

Par example le document EP-A-0881195 décrit un procédé de traitement des eaux résiduaires contaminées par de la matière organique non-biodégradable, mis en oeuvre dans un bassin biologique aéré et dans un réacteur d' oxydation chimique par injection d'un gaz ozoné. Les boues activées sont mélangées avec le gaz ozoné dans le réacteur: la matière organique non-biodégradable est ainsi rendue biodégradable et est recirculée au bassin biologique.

Le document JP10005762 décrit aussi un procédé de traitement des eaux résiduaires mis en oeuvre dans un bassin biologique aéré et dans un réacteur d'oxydation chimique par injection d'un gaz ozoné. La liqueur mixte de boues activées est extraite du bassin biologique et est mélangée avec le gaz ozoné dans le réacteur. L'eau traitée est ainsi extraite du bassin biologique et séparée des boues dans un filtre à membranes.

Ainsi, selon la présente invention l'oxydation chimique est réalisée par injection d'un gaz ozoné dans la liqueur mixte de boues activées, à l'entrée du ou des modules du bio-réacteur à membranes, en utilisant comme réacteur sous pression, la boucle de recirculation à fort débit du bioréacteur à membranes pour aspirer le gaz ozoné et le dissoudre à la pression constante en amont des membranes (plusieurs 100 000 Pa) et en utilisant l'énergie dissipée au niveau des membranes et les turbulences qui en résultent.

L'invention vise également un dispositif pour la mise en oeuvre du procédé spécifié ci-dessus.

D'autres caractéristiques et avantages de cette invention ressortiront de la description faite ci-après en référence à la figure unique du dessin annexé qui représente, de façon schématique, un exemple de réalisation du dispositif mettant en oeuvre cette invention.

Ainsi qu'on l'a précisé ci-dessus le procédé objet de l'invention consiste à injecter de l'ozone à faible concentration dans la liqueur mixte de boues activées, à l'entrée du ou des modules d'un bio-réacteur à membranes 6. De façon surprenante, on a constaté qu'en injectant une dose d'ozone de 0,3 à 0,9 kg d'ozone par kg de DCO éliminée, on atteint la même réduction que celle obtenue par la mise en oeuvre des procédés selon l'état antérieur de la technique tout en réduisant de plus de 50% la production de boues induite par le traitement en l'absence d'injection d'ozone.

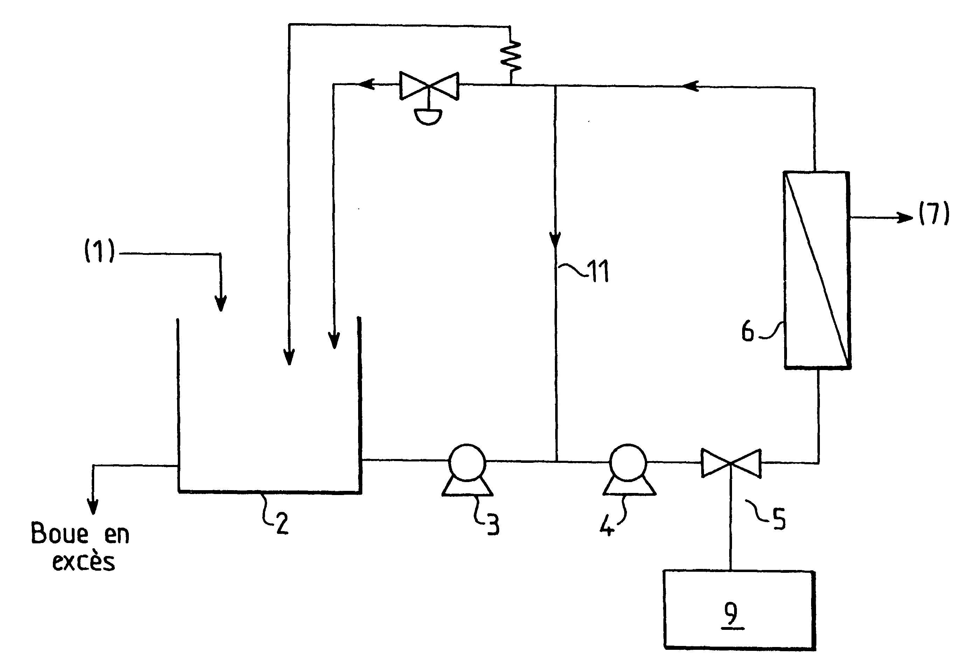

Sur le schéma de la figure 1 on voit en 2 le bassin biologique à boues activées dans lequel l'eau à traiter 1 est délivrée et où est maintenue une concentration de la biomasse (boues activées) comprise entre 4 g/l et 30g/l.

Le dispositif comporte un ozoneur 9 et un bio-réacteur à membranes 6. La liqueur mixte de boues activées est extraite du bassin biologique 2 par une pompe de gavage 3 qui alimente une pompe de circulation 4 assurant la vitesse tangentielle requise le long des membranes de bio-réacteur 6.

Le gaz ozoné produit par l'ozoneur 9 est introduit, par l'intermédiaire d'un éjecteur 5 dans la conduite dans laquelle la liqueur mixte est mise en circulation par la pompe 4, ce qui émulsionne le gaz ozoné et le dissout dans la liqueur mixte qui circule ensuite dans les membranes résistant à l'ozone du bio-réacteur 6. Le perméat (eau traitée) est évacué en 7 et le concentrat revient en boucle fermée 11 sur la pompe de recirculation 4. La fraction du débit correspondant au débit de la pompe de gavage 3, moins le débit du perméat, est envoyée dans le bassin biologique 2.

On a donné ci-après un exemple d'application de l'invention. Dans cet exemple non limitatif on a utilisé deux lignes identiques de bio-réacteur à membranes : l'une des lignes étant équipée d'une injection d'ozone à l'entrée des membranes (selon la caractéristique de l'invention) et l'autre ne comportant pas d'injection d'ozone. Chaque ligne étant alimentée selon un débit de 0,1 m³/h par une eau résiduaire provenant de l'industrie chimique ayant une DCO de 4g/l. Les bassins biologiques présentaient un volume de 2,5 m³ soit un temps de séjour de l'ordre de 24 heures. La concentration des boues dans ces bassins étant maintenue, dans les deux cas à 12 g/l ± 1g/l.

La vitesse de recirculation dans les membranes était maintenue à 4 m/sec. et la pression d'alimentation était stabilisée à 5 10⁵ Pa.

Après mise en régime de deux mois et fonctionnement continu pendant 1 mois, les résultats de la ligne de bio-réacteur à membranes sans injection d'ozone ne satisfaisaient pas à la norme de rejet puisque la DCO du perméat était de 500 mg/l pour 175 mg/l requis. Une étape d'ozonation a donc dû être installée en aval.

Les tableaux ci-après montrent respectivement les résultats obtenus avec l'installation de traitement selon la technique antérieure et une comparaison desdits résultats avec ceux que l'on a observés sur l'installation objet de l'invention.

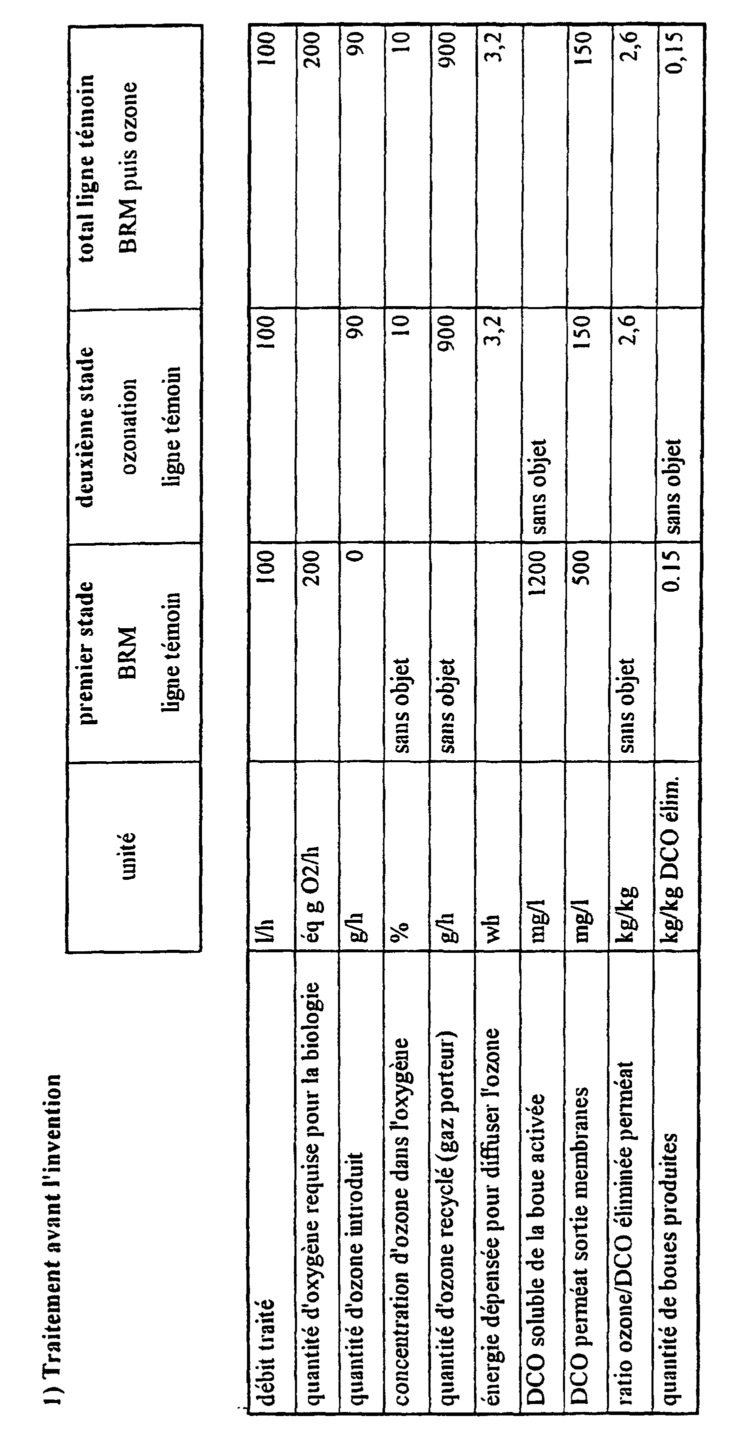

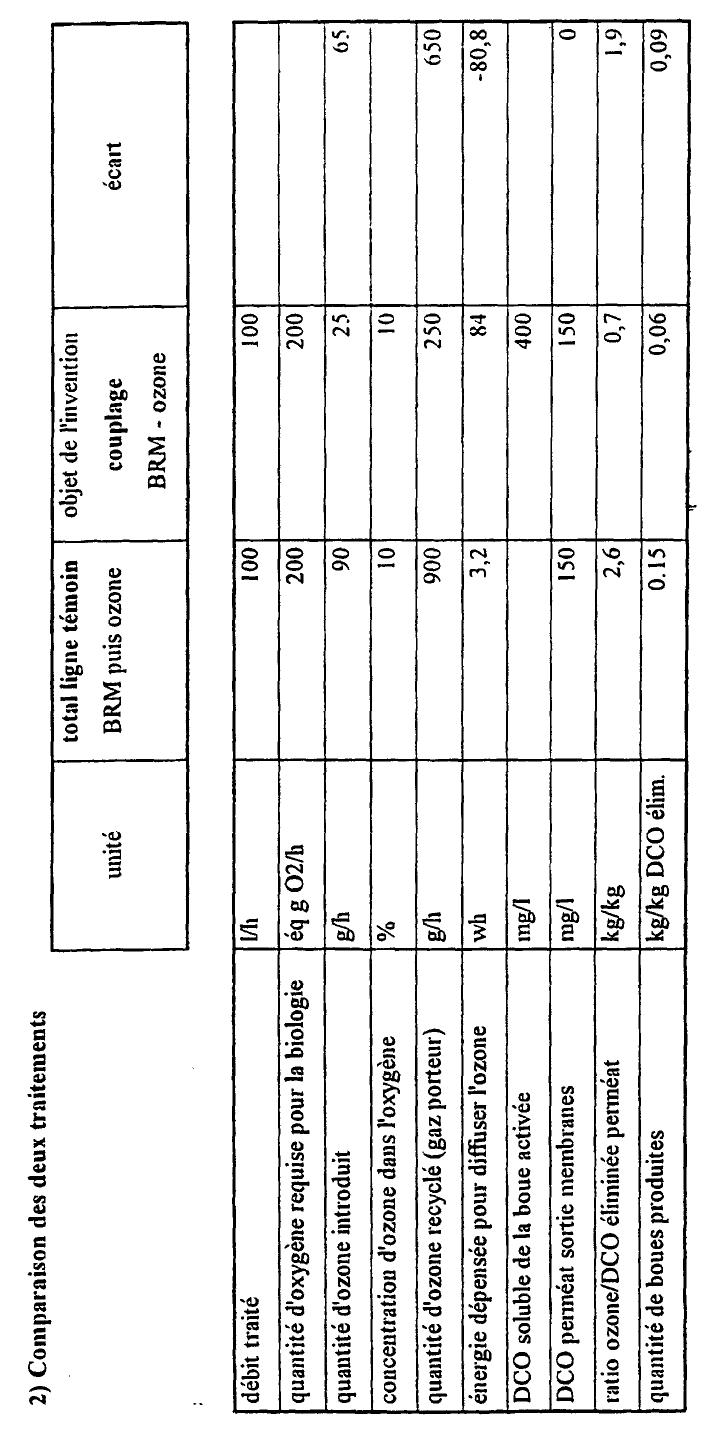

**En prenant en première approximation :**

| | |
|---|---|
| 1 kgO₂ = | 2 équivalent kwh |
| 1 kgO₃ = | 10 équivalent kwh |
| 1 kg boues à détruire = | 4 équivalent kwh |

**une installation traitant 1000 m3/j à 4g/l de DCO permet selon l'invention une économie de :**

| | |
|---|---|
| en oxygène | 4745000 équivalent kwh |
| en ozone | 2372500 équivalent kwh |
| en diffusion de l'ozone | -294920 kwh |
| en destruction des boues | 5256000 équivalent kwh |
| total | 12078580 équivalent kwh |
| soit environ : | 640 000 Euro/ an |

**avec un investissement réduit de 20% environ (taille de l'ozoneur et suppression de la tour d'ozonation).**

Parmi les avantages apportés par l'invention on peut citer notamment les suivants :
⇒ Consommation d'ozone 2 à 8 fois moins importante que dans les systèmes selon la technique antérieure pour une efficacité identique.
⇒ Réduction de production de boue simultanée supérieure à 50% et à coût nul si l'on considère que l'objectif initial est la réduction de la matière organique réfractaire.
⇒ Consommation électrique pour pressuriser le gaz ozoné divisée par 5 puisque réduite à la perte de charge de l'éjecteur, la pression étant par ailleurs nécessaire pour le fonctionnement des membranes.
⇒ Utilisation totale du gaz porteur (oxygène), pressurisé lors de l'injection de l'ozone, pour les besoins de la respiration de la biomasse (ce qui équivaut à un enrichissement en air au niveau du bassin d'aération).
⇒ Gain de 5 à 30% (selon les applications) sur le flux traversant la membrane par action de l'ozone qui réduit l'encrassement et le colmatage de ladite membrane.
⇒ Réduction de l'encrassement en profondeur et du colmatage des membranes, permettant d'espacer les lavages chimiques.
⇒ Réduction de la viscosité de la boue activée d'environ 50%, permettant moins d'énergie de circulation dans les membranes et de travailler à un taux de concentration plus élevé dans la boucle de recirculation (réduction de la taille de la pompe de gavage).
⇒ Suppression du réacteur d'ozonation puisque la réaction s'opère dans la membrane.

Il demeure bien entendu que l'invention n'est pas limitée aux exemples de mise en oeuvre ou de réalisation décrites et/ou représentées mais qu'elle en englobe toutes les variantes.

## Revendications

1. Procédé d'élimination de la matière organique présente notamment dans les eaux résiduaires, réfractaire à un traitement biologique, mis en oeuvre dans un bio-réacteur à membranes de microfiltration ou d'ultrafiltration, inorganiques ou organiques, résistant à l'ozone, selon lequel on soumet ladite matière organique à une oxydation chimique, par injection d'un gaz ozoné dans la liqueur mixte de boues activées, **caractérisé en ce que** ladite oxydation chimique est réalisée simultanément au traitement biologique membranaire à l'entrée du ou des modules du bio-réacteur à membranes, en utilisant comme réacteur sous pression, la boucle de recirculation du bio-réacteur, la dose d'ozone, dans ledit gaz ozoné, étant de à,3 à 0,9 kg d'ozone par kg de DCO éliminée, ladite injection du gaz ozoné étant effectuée entre le bassin biologique (2) et le bio-réacteur à membranes (6).

2. Installation pour la mise en oeuvre du procédé selon la revendication 1 comprenant un bassin biologique (2) recevant l'eau à traiter et dans lequel est maintenue la concentration souhaitée en biomasse et un bio-réacteur à membranes (6), extérieur au bassin biologique (2), et comprenant une sortie (7) de perméat, la liqueur mixte de boues activées extraite dudit bassin étant délivrée au bio-réacteur (6), **caractérisée en ce qu'**elle comporte en outre un ozoneur (9), un éjecteur (5) pour introduire le gaz ozoné produit par l'ozoneur dans la liqueur mixte de boues activées qui est ensuite admise dans le bio-réacteur et une boucle fermée (11) assurant une recirculation du concentrat issu du bio-réacteur.

3. Installation selon la revendication 1, **caractérisée en ce que** la concentration en biomasse dans le bassin biologique (2) est comprise entre 4 g/l et 30 g/l.

## Claims

1. Process for the elimination of the organic matter more particularly present in wastewater and resistant to a biological treatment, implemented in a bioreactor having microfiltration or ultrafiltration, organic or inorganic and ozone-resistant membranes, according to which said organic matter undergoes a chemical oxidation by injecting an ozonized gas into the mixed activated sludge liquor, **characterized in that** said chemical oxidation is performed simultaneously with the membrane-based biological treatment at the entrance of the module or modules of the membrane-equipped bioreactor, by using as the pressurized reactor the bioreactor recycling loop, the ozone dose in said ozonized gas being 0.3 to 0.9 kg of ozone per kg of eliminated COD, said ozonized gas injection being performed between the biological tank (2) and the membrane-equipped bioreactor (6).

2. Installation for performing the process according to claim 1 comprising a biological tank (2) receiving the water to be treated and in which is maintained the desired biomass concentration and a membrane-equipped bioreactor (6) outside the biological tank (2) and comprising a permeate outlet (7), the mixed activated sludge liquor extracted from said tank being supplied to the bioreactor (6), **characterized in that** it also incorporates an ozonizer (9), an ejector (5) for introducing the ozonized gas produced by the ozonizer into the mixed activated sludge liquor which is then introduced into the bioreactor and a closed loop (11) ensuring a recycling of the concentrate from the bioreactor.

3. Installation according to claim 1, **characterized in that** the biomass concentration in the biological tank (2) is between 4 and 30 g/l.

## Patentansprüche

1. Verfahren zum Eliminieren von organischer Materie, die insbesondere in Abwässern enthalten und die widerstandsfähig gegen eine biologische Behandlung ist, angewendet in einem Bioreaktor mit anorganischen oder organischen und ozonbeständigen Membranen für Mikrofiltration oder Ultrafiltration, bei welchem Verfahren man besagte organische Materie einer chemischen Oxidation unterzieht durch Einspritzen eines ozonisierten Gases in die aus Belebtschlämmen gemischte Flüssigkeit, **dadurch gekennzeichnet, dass** besagte chemische Oxidation gleichzeitig mit der biologischen Behandlung auf Membranen am Eingang des oder der Module des Membran-Bioreaktors durchgeführt wird, wobei als Druck-Reaktor die Rückführschleife des Bioreaktors verwendet wird, wobei die Dosis an Ozon in besagtem ozonisiertem Gas zwischen 0,3 bis 0,9 kg Ozon pro kg eliminierter DCO beträgt, und wobei besagtes Einspritzen des ozonisierten Gases zwischen dem biologischen Becken (2) und dem Membran-Bioreaktor (6) erfolgt.

2. Anlage zum Durchführen des Verfahrens nach Anspruch 1, mit einem biologischen Becken (2), dem das zu behandelnde Wasser zugeführt wird und in dem die gewünschte Konzentration an Biomasse eingehalten wird, und einen Membran-Bioreaktor (6) außerhalb des biologischen Beckens (2), der einen Ausgang (7) für Permeat hat, wobei die aus besagtem Becken abgezogene gemischte Flüssigkeit aus Belebtschlämmen dem Bioreaktor (6) zugeführt wird, **dadurch gekennzeichnet, dass** sie außerdem einen Ozonisierer (9), einen Ejektor (5) zum Einbringen des vom Ozonisierer ozonisierten Gases in die gemischte Flüssigkeit aus Belebtschlämmen, die anschließend dem Bioreaktor zugeführt wird, und eine geschlossene Schleife (11) umfasst, welche eine Rückführung des aus dem Bioreaktor stammenden Konzentrats sicherstellt.

3. Anlage nach Anspruch 2, **dadurch gekennzeichnet, dass** die Konzentration der Biomasse in dem biologischen Becken (2) zwischen 4 g/l und 30 g/l beträgt.
